# EUROPÄISCHE PATENTANMELDUNG

(11) **EP 4 368 313 A1**
(43) Veröffentlichungstag der Anmeldung: **15.05.2024**
(21) Anmeldenummer: 22206906.4
(22) Anmeldetag: 11.11.2022
(51) Int. Cl.: B22F 1/05, B22F 1/17, B22F 9/30, C22C 1/04

(54) **UNGETRÄGERTES BIMETALLISCHES PARTIKELFÖRMIGES MATERIAL**

(71) Anmelder: Heraeus Precious Metals GmbH & Co. KG, 63450 Hanau (DE)
(72) Erfinder: Wiegand, Milena, 63450 Hanau (DE); Meza-Chincha, Ana-Lucia, 63450 Hanau (DE); Harwardt, Marie-Lena, 63450 Hanau (DE); Gock, Michael, 63450 Hanau (DE); Hörteis, Matthias, 63450 Hanau (DE); Imgrund, Christian, 63450 Hanau (DE)
(74) Vertreter: Heraeus IP

(57) **Zusammenfassung**

Ungeträgertes bimetallisches partikelförmiges Material umfassend elementares metallisches Silber und elementares metallisches Ruthenium mit einer durchschnittlichen Teilchengröße (d50) im Bereich von 1 bis 100 µm, bevorzugt 1 bis 20 µm und mit einem Silber: Ruthenium-Gewichtsverhältnis im Bereich von 1 bis 2000 Gewichtsteilen Silber: 1 Gewichtsteil Ruthenium.

## Beschreibung

Die Erfindung betrifft ein ungeträgertes bimetallisches partikelförmiges Material umfassend elementares metallisches Silber und elementares metallisches Ruthenium sowie ein effizientes Verfahren zu seiner Herstellung.

EP 3 915 376 A1 offenbart ein als antimikrobielles, antivirales und/oder fungizides Additiv verwendbares Hybridmaterial, das Partikel umfasst, die jeweils mindestens ein Trägermaterial umfassen, das zumindest teilweise mit mindestens zwei unterschiedlichen Metallen beschichtet ist. Die Metalle stehen zumindest mit ihren jeweiligen Oberflächen miteinander in elektrisch leitendem Kontakt. Das erste Metall umfasst mindestens ein Übergangsmetallelement, das über mehrere Oxidationsstufen verfügt und über katalytisch aktive Zentren einen Wechsel der Oxidationsstufen erlaubt, beispielsweise Ruthenium. Das zweite Metall, beispielsweise Silber, umfasst mindestens einen elektrisch leitfähigen Silberhalbleiter, wobei die beiden Metalle Halbelemente bilden, die in Gegenwart von Wasser und Sauerstoff kurzgeschlossen sind.

Aufgabe der Erfindung war die Bereitstellung eines einfach und effizient herstellbaren, ausgeprägt antimikrobiell wirksamen Materials auf Basis eines elementares Silber und elementares Ruthenium umfassenden Materials.

Die Aufgabe kann gelöst werden durch Bereitstellung eines ungeträgerten bimetallischen partikelförmigen Materials umfassend elementares metallisches Silber und elementares metallisches Ruthenium mit einer durchschnittlichen Teilchengröße (d50) im Bereich von 1 bis 100 µm, bevorzugt 1 bis 20 µm und mit einem Silber: Ruthenium-Gewichtsverhältnis im Bereich von 1 bis 2000 Gewichtsteilen Silber: 1 Gewichtsteil Ruthenium, in der weiteren Folge auch kurz nur als "ungeträgertes bimetallisches partikelförmiges Material" bezeichnet.

Der hierin verwendete Begriff "durchschnittliche Teilchengröße" bedeutet den mittels Laserbeugung bestimmbaren volumenmittleren Primärteilchendurchmesser (d50). Als Maß für den Teilchendurchmesser kann dabei zweckmäßig der sogenannte Equivalent Circular Area Diameter (ECAD) verwendet werden (vgl. RENLIANG XU ET AL: "Comparison of sizing small particles using different technologies", POWDER TECHNOLOGY, ELSEVIER, BASEL (CH), Bd. 132, Nr. 2-3, 24. Juni 2003 (2003-06-24), Seiten 145-153). Laserbeugungsmessungen können mit einem entsprechenden Teilchengrößenmessgerät, beispielsweise einem Mastersizer 3000 oder einem Mastersizer 2000 von Malvern Instruments nach der Nassbestimmungsmethode durchgeführt werden. Bei der Nassbestimmungsmethode kann partikelförmige Probe im Rahmen der Probenvorbereitung in Ethanol mittels Ultraschall dispergiert werden.

Das erfindungsgemäße ungeträgerte bimetallische partikelförmige Material umfasst Partikel aus mit elementarem Ruthenium ausgestatteten Silberpartikeln. Es kann auch Silberpartikel, Rutheniumpartikel und/oder mit elementarem Silber ausgestattete Rutheniumpartikel umfassen. Zumindest hauptsächlich, beispielsweise zu ≥90 bis 100 Gew.-% besteht es jedoch aus mit elementarem Ruthenium ausgestatteten Silberpartikeln; dementsprechend kann der 0 bis ≤10 Gew.-% betragende Anteil aus Silberpartikeln, Rutheniumpartikeln und/oder mit elementarem Silber ausgestatteten Rutheniumpartikeln bestehen. Das erfindungsgemäße ungeträgerte bimetallische partikelförmige Material umfasst keinerlei Trägermaterial; über die mit elementarem Ruthenium ausgestatteten Silberpartikel sowie die gegebenenfalls vorhandenen Silberpartikel, Rutheniumpartikel und/oder mit elementarem Silber ausgestatteten Rutheniumpartikel hinausgehend umfasst das erfindungsgemäße ungeträgerte bimetallische partikelförmige Material keinerlei bewusst hinzugefügtes Material oder Substanzen, insbesondere keinerlei Material oder Substanzen, welche als Trägermaterial dienlich sein könnten; auch Vitamine, Vitaminderivate, Ascorbinsäure und Ascorbinsäurederivate sind nicht umfasst.

Das elementare Ruthenium der damit ausgestatteten Silberpartikel liegt auf der äußeren Oberfläche der Silberpartikel vor und kann dabei beispielsweise eine diskontinuierliche Schicht und/oder kleine Rutheniumpartikel (Rutheniuminseln) ausbilden; die Silberpartikel selber fungieren dabei als Trägermaterial. Die Rasterelektronenmikroskopie kann eine geeignete Methode zur Betrachtung solcher morphologischer Eigenschaften sein. Das Silber und das Ruthenium liegen nicht legiert, sondern statistisch verteilt vor und beide Edelmetalle stehen dabei mindestens zum Teil in Kontakt miteinander. Für den Fachmann ist klar, dass das Silber und das Ruthenium an der Oberfläche des erfindungsgemäßen ungeträgerten bimetallischen partikelförmigen Materials andere Silberspezies als elementares metallisches Silber und andere Rutheniumspezies als elementares metallisches Ruthenium umfassen kann, beispielsweise entsprechende Oxide, Halogenide und/oder Sulfide. Derartige Spezies können gegebenenfalls ungewollt und unvermeidlich als geringfügige Verunreinigung während der Herstellung oder im Anschluss daran gebildet werden, beispielsweise während Lagerung, Verwendung oder Weiterverarbeitung des erfindungsgemäßen ungeträgerten bimetallischen partikelförmigen Materials.

Die Erfindung betrifft auch ein Verfahren zur Herstellung des erfindungsgemäßen ungeträgerten bimetallischen partikelförmigen Materials. In dem erfindungsgemäßen Verfahren kann das erfindungsgemäße ungeträgerte bimetallische partikelförmige Material erhalten werden im Zuge einer Trocknung und einer unter nichtoxidierender Atmosphäre stattfindenden thermolytischen Behandlung einer wässrigen Suspension umfassend Wasser, Silberpartikel und mindestens einen Rutheniumvorläufer. Bei der thermolytischen Behandlung handelt es sich um eine Behandlung bei oder oberhalb der Thermolysetemperatur, d.h. der Mindest-Objekttemperatur, welche eine thermische Zersetzung des oder der Rutheniumvorläufer unter nichtoxidierender Atmosphäre zu elementarem Ruthenium gewährleistet.

Der hierin wiederholt verwendete Begriff "nichtoxidierende Atmosphäre" bezeichnet eine reduzierende oder inerte Atmosphäre. Der Begriff "reduzierende Atmosphäre" bezeichnet eine Atmosphäre bestehend aus einem reduzierende Eigenschaften aufweisenden Gas wie beispielsweise Wasserstoff und/oder Kohlenmonoxid oder eine Gasmischung aus einem reduzierende Eigenschaften aufweisenden Gas mit einem Inertgas wie beispielsweise Stickstoff, Argon und/oder Kohlendioxid; der Volumenanteil reduzierende Eigenschaften aufweisenden Gases innerhalb einer Gasmischung mit Inertgas kann beispielsweise im Bereich von 5 bis 10 Vol.-% liegen. Der Begriff "inerte Atmosphäre" bezeichnet eine Atmosphäre bestehend aus einem Inertgas wie beispielsweise Stickstoff, Argon und/oder Kohlendioxid.

In dem erfindungsgemäßen Verfahren werden Silberpartikel und mindestens ein Rutheniumvorläufer verwendet.

Bei den hierin erwähnten Silberpartikeln respektive den im erfindungsgemäßen Verfahren als ein Ausgangsmaterial verwendeten Silberpartikeln handelt es sich um solche mit einer durchschnittlichen Teilchengröße (d50) beispielsweise im Bereich von 0,5 µm bis 50 µm. Die Silberpartikel können von verschiedenster Gestalt sein, beispielsweise können sie eine sphärische, eine im Wesentlichen sphärische, eine elliptische, eine eiförmige, eine flake-förmige (plättchenförmige) oder eine unregelmäßige Form aufweisen. Die Silberpartikel sind zweckmäßigerweise ungecoatet (unbeschichtet) und sie können Partikel aus reinem Silber (Reinheit des Silbers von wenigstens 99,9 Gew.-%) und/oder solche aus Silberlegierungen mit bis zu 10 Gew.-% wenigstens eines anderen Legierungsmetalls umfassen. Beispiele für geeignete Legierungsmetalle sind Kupfer, Gold, Nickel, Palladium, Platin und Aluminium. Bevorzugt sind Silberpartikel aus reinem Silber. Die Silberpartikel sind kommerziell erhältlich.

Ein Beispiel ist das Silberpulver "Ag 300-01" von Heraeus Electronics. Vergleichbare Pulver sind auch von anderen Firmen erhältlich.

Bei dem oder den im erfindungsgemäßen Verfahren verwendeten Rutheniumvorläufern handelt es sich um unter nichtoxidierender Atmosphäre thermisch zu elementarem Ruthenium zersetzbare Rutheniumverbindungen.

Alle unter nichtoxidierender Atmosphäre thermisch zu elementarem Ruthenium zersetzbaren Rutheniumverbindungen können im erfindungsgemäßen Verfahren unter reduzierender Atmosphäre thermolytisch behandelt und dabei zu elementarem Ruthenium thermisch zersetzt werden. Beispiele für in diesem Zusammenhang geeignete Rutheniumverbindungen umfassen Rutheniumnitrosylnitrat, Rutheniumoxalat, Rutheniumacetat und insbesondere Rutheniumnitrosyloxalat.

Einige unter nichtoxidierender Atmosphäre thermisch zu elementarem Ruthenium zersetzbare Rutheniumverbindungen können im erfindungsgemäßen Verfahren sogar unter inerter Atmosphäre thermolytisch behandelt und dabei zu elementarem Ruthenium thermisch zersetzt werden. Der Fachmann kann eine solche Eignung einer Rutheniumverbindung zur thermischen Zersetzung zu elementarem Ruthenium unter inerter Atmosphäre leicht beispielsweise thermogravimetrisch unter Inertgasatmosphäre ermitteln. Beispiele für in dieser Hinsicht geeignete Rutheniumverbindungen umfassen Rutheniumoxalat, Rutheniumacetat und insbesondere Rutheniumnitrosyloxalat.

Das erfindungsgemäße Herstellungsverfahren umfasst die Bereitstellung einer wässrigen Suspension umfassend Wasser, Silberpartikel und mindestens einen Rutheniumvorläufer, sowie das Trocknen und thermolytische Behandeln der wässrigen Suspension unter nichtoxidierender Atmosphäre. Das Trocknen und das thermolytische Behandeln können nacheinander oder als gemeinsamer Schritt durchgeführt werden.

In einer ersten Ausführungsform umfasst das erfindungsgemäße Verfahren die aufeinanderfolgenden Schritte:
(1) Bereitstellen einer wässrigen Suspension umfassend Wasser, Silberpartikel und mindestens einen Rutheniumvorläufer,
(2) Trocknen der in Schritt (1) bereitgestellten wässrigen Suspension, und
(3) thermolytisches Behandeln des nach Beendigung von Schritt (2) erhaltenen getrockneten Materials unter nichtoxidierender Atmosphäre.

In einer zweiten Ausführungsform gemeinsam durchgeführter Schritte (2) und (3) umfasst das erfindungsgemäße Verfahren die aufeinanderfolgenden Schritte:
(1) Bereitstellen einer wässrigen Suspension umfassend Wasser, Silberpartikel und mindestens einen Rutheniumvorläufer, und
(2+3) Trocknen und thermolytisches Behandeln der in Schritt (1) bereitgestellten wässrigen Suspension unter nichtoxidierender Atmosphäre.

In Schritt (1) gemäß beider Ausführungsformen des erfindungsgemäßen Verfahrens wird eine wässrige Suspension bereitgestellt, welche Wasser, Silberpartikel und mindestens einen Rutheniumvorläufer umfasst. Die wässrige Suspension kann die Form einer dünnflüssigen Aufschlämmung oder einer brei-, pasten- oder teigförmigen Masse aufweisen.

Die Herstellung der wässrigen Suspension kann erfolgen, indem die Silberpartikel zu einer wässrigen Lösung des mindestens einen Rutheniumvorläufers zugegeben und darin suspendiert werden. Die umgekehrte Zugabereihenfolge ist ebenfalls möglich.

Der Gewichtsanteil der Silberpartikel der in Schritt (1) des erfindungsgemäßen Verfahrens bereitgestellten wässrigen Suspension kann beispielsweise im Bereich von 5 bis 60 Gew.-% liegen.

Der Ruthenium-Gewichtsanteil der in Schritt (1) des erfindungsgemäßen Verfahrens bereitgestellten wässrigen Suspension kann beispielsweise im Bereich von 0,5 bis 20 Gew.-% liegen. Die in Schritt (1) des erfindungsgemäßen Verfahrens bereitgestellte wässrige Suspension zeichnet sich aus durch ein Gewichtsverhältnis der beiden Edelmetalle beispielsweise im Bereich von 1 bis 2000 Gewichtsteilen Silber: 1 Gewichtsteil Ruthenium und dabei im Allgemeinen deutlich zugunsten des Silbers gelagert.

Neben den Silberpartikeln und dem oder den Rutheniumvorläufern umfasst die in Schritt (1) des erfindungsgemäßen Verfahrens bereitgestellte wässrige Suspension im Allgemeinen nur Wasser und gegebenenfalls korrespondierende Säure aus dem oder den Rutheniumvorläufern, d.h. besagte Suspension besteht zumindest im Wesentlichen oder bevorzugt nur aus den Silberpartikeln, dem oder den Rutheniumvorläufern und Wasser.

In Schritt (2) gemäß der ersten Ausführungsform des erfindungsgemäßen Verfahrens wird die in Schritt (1) bereitgestellte wässrige Suspension getrocknet, d.h. von Wasser und gegebenenfalls vorhandenen weiteren flüchtigen Substanzen befreit.

Die wässrige Suspension wird bis zur Trockne eingeengt. Zweckmäßig wird die wässrige Suspension während des Einengens bewegt, beispielsweise durch Rühren und/oder Schütteln und/oder Rotation, d.h. Rotation des die wässrige Suspension beinhaltenden Gefäßes oder Behältnisses. Im Allgemeinen wird während des Einengens erwärmt und/oder Unterdruck angelegt, um Wasser und gegebenenfalls vorhandene weitere flüchtige Substanzen zu entfernen. Während des Einengens kann bei einer Temperatur beispielsweise im Bereich von 40 bis 95 °C gearbeitet werden. Das nach Erreichen der Trockne erhaltene Material kann bei Bedarf zerkleinert werden.

In Schritt (3) gemäß der ersten Ausführungsform des erfindungsgemäßen Verfahrens werden der oder die Rutheniumvorläufer thermisch unter Bildung von elementarem Ruthenium zersetzt. Dazu wird das nach Beendigung von Schritt (2) erhaltene und gegebenenfalls zerkleinerte Material (d.h. die nach Beendigung von Schritt (2) erhaltene getrocknete, ursprünglich wässrige Suspension) einer thermolytischen Behandlung unter nichtoxidierender Atmosphäre unterworfen. Zu dem Zweck kann das Material unbewegt oder bewegt auf eine Thermolysetemperatur beispielsweise im Bereich von 150 bis 1000°C erhitzt werden, beispielsweise in einem statischen Ofen, einem Wirbelschichtreaktor oder einem Drehrohrofen.

Zweckmäßig wird der Ofenraum während Schritt (3) mit dem nichtoxidierende Eigenschaften aufweisenden Gas gespült respektive durchströmt; der Gasstrom kann dabei auch dem Austrag von gasförmigen Zersetzungsprodukten dienen. Die nichtoxidierende Atmosphäre kann auch druckreduziert sein.

Im kombinierten Schritt (2+3) gemäß einer ersten Variante der zweiten Ausführungsform des erfindungsgemäßen Verfahrens wird die in Schritt (1) bereitgestellte wässrige Suspension getrocknet und unter nichtoxidierender Atmosphäre thermolytisch behandelt. Dabei kann die in Schritt (1) bereitgestellte wässrige Suspension innerhalb eines Ofens bewegt oder unbewegt ein Temperaturprofil umfassend eine Trocknungstemperatur und eine höhere Thermolysetemperatur durchlaufen. Dies kann verwirklicht werden, indem ein Ofen mit einem Trocknungstemperatur und Thermolysetemperatur umfassenden Temperaturgradienten durchlaufen wird oder indem in einem Ofen mit zeitlich gesteuertem Aufheiz- respektive Temperaturprogramm gearbeitet wird, welches zunächst Trocknungstemperatur und anschließend Thermolysetemperatur sicherstellt. Beispiele für verwendbare Ofentypen umfassen statische Öfen, Wirbelschichtreaktoren und Drehrohröfen. So kann zunächst eine Trocknung der in Schritt (1) bereitgestellten wässrigen Suspension erfolgen, d.h. eine Befreiung von Wasser und gegebenenfalls vorhandenen weiteren flüchtigen Substanzen, also eine Einengung bis zur Trockne. Während des Einengens kann bei einer Trocknungstemperatur beispielsweise im Bereich von 40 bis 95 °C gearbeitet werden. Nach beendeter Trocknung werden der oder die Rutheniumvorläufer thermisch unter Bildung von elementarem Ruthenium zersetzt, indem sie unmittelbar ohne zwischenzeitliches Abkühlen weiter erhitzt werden auf Thermolysetemperatur beispielsweise im Bereich von 150 bis 1000 °C; d.h. das getrocknete Material wird einer thermolytischen Behandlung unterworfen. Besagte Trocknung als auch besagte sich daran unmittelbar anschließende Thermolyse erfolgen unter nichtoxidierender Atmosphäre.

Auch im kombinierten Schritt (2+3) gemäß einer zweiten Variante der zweiten Ausführungsform des erfindungsgemäßen Verfahrens wird die in Schritt (1) bereitgestellte wässrige Suspension getrocknet und unter nichtoxidierender Atmosphäre thermolytisch behandelt. Dabei kann die in Schritt (1) bereitgestellte wässrige Suspension bewegt oder unbewegt besagter Thermolysetemperatur beispielsweise im Bereich von 150 bis 1000 °C innerhalb eines Ofens ausgesetzt werden. Beispiele für verwendbare Ofentypen umfassen statische Öfen, Wirbelschichtreaktoren und Drehrohröfen. Dabei werden der oder die Rutheniumvorläufer thermisch unter Bildung von elementaren Ruthenium zersetzt. Trocknung und Thermolyse erfolgen hier praktisch parallel bzw. überlappend. Gearbeitet wird unter nichtoxidierender Atmosphäre.

Nach Beendigung von Schritt (3) gemäß der ersten Ausführungsform oder von Schritt (2+3) gemäß beider Varianten der zweiten Ausführungsform des erfindungsgemäßen Verfahrens sowie gegebenenfalls einem sich anschließenden Zerkleinern und/oder Klassieren erhält man das erfindungsgemäße ungeträgerte bimetallische partikelförmige Material.

Das erfindungsgemäße ungeträgerte bimetallische partikelförmige Material zeichnet sich durch eine besonders ausgeprägte antimikrobielle Wirkung aus, wie in üblichen Hemmhof-Tests oder durch Bestimmung der minimalen Hemmkonzentration aus Wachstumskurven von Mikroorganismen festgestellt werden kann. Die Erfindung betrifft insofern auch die Verwendung des erfindungsgemäßen ungeträgerten bimetallischen partikelförmigen Materials als Additiv zur antimikrobiellen Ausrüstung von Metalloberflächen; Beschichtungsmitteln wie Lacken und anderen Anstrichmitteln; Putzen; Formmassen; Kunststoffen in Gestalt von Kunststofffolien, Kunststoffteilen oder Kunststofffasern; Textilien respektive in textilen Anwendungen; Kunstharzprodukten; Ionenaustauscherharzen; Silikonprodukten; Cellulose-basierenden Produkten; Schaumstoffen; Kosmetika; und vielem anderen mehr.

Das erfindungsgemäße ungeträgerte bimetallische partikelförmige Material kann im Übrigen auch als heterogener Katalysator verwendet werden, beispielsweise bei der Katalyse der Bildung von antimikrobiell wirksamen Hydroxylradikalen innerhalb von wässrigen, ein Bakterienwachstum erlaubenden Medien.

Das erfindungsgemäße ungeträgerte bimetallische partikelförmige Material kann bei den vorerwähnten Verwendungen als trockenes Pulver, als mit einem gewünschten Feuchtegehalt ausgestattetes Pulver oder als Suspension eingesetzt werden.

### Erfindungsgemäßes Beispiel 1 (Thermolytische Herstellung eines erfindungsgemäßen, mit Ruthenium ausgestatteten Silberpulvers aus 80 Gew.-% elementarem Silber und 20 Gew.-% elementarem Ruthenium):

Eine wässrige Suspension, zubereitet aus 5 g Silberpulver (46,4 mmol Ag, Silberpulver "Ag 300-01" von Heraeus Electronics) und 21,55 g Rutheniumnitrosyloxalat-Lösung (Rutheniumanteil 5,8 Gew.-%, 12,4 mmol Ru), wurde am Rotationsverdampfer bis zur Trockne eingeengt (90 °C/300 mbar). Das trockene Material wurde dann im Rohrofen für 21 Stunden unter Stickstoffatmosphäre bei 200 °C calciniert und mit einem Achatmörser zerkleinert. Mittels ICP-OES wurde ein Silbergehalt von 80,0 Gew.-% und ein Rutheniumgehalt von 20,0 Gew.-% des Produktes (bezogen auf 0 Gew.-% Restfeuchte) bestimmt.

### Erfindungsgemäßes Beispiel 2 (Thermolytische Herstellung eines erfindungsgemäßen, mit Ruthenium ausgestatteten Silberpulvers aus 80 Gew.-% elementarem Silber und 20 Gew.-% elementarem Ruthenium):

Eine wässrige Suspension, zubereitet aus 5 g Silberpulver (46,4 mmol Ag, Silberpulver "Ag 300-01" von Heraeus Electronics) und 93,98 g Rutheniumacetat-Lösung (Rutheniumanteil 1,3 Gew.-%, 12,4 mmol Ru), wurde am Rotationsverdampfer bis zur Trockne eingeengt (90 °C/300 mbar). Das trockene Material wurde dann im Rohrofen für 21 Stunden unter Stickstoffatmosphäre bei 800 °C calciniert und mit einem Achatmörser zerkleinert. Mittels ICP-OES wurde ein Silbergehalt von 80,0 Gew.-% und ein Rutheniumgehalt von 20,0 Gew.-% des Produktes (bezogen auf 0 Gew.-% Restfeuchte) bestimmt.

### Prüfung auf antimikrobielle Wirkung

In verschiedenen Erlenmeyerkolben wurden je 30 mL einer Kultur von Methicillin-resistentem Staphylococcus aureus (MRSA) in Trypticase-Soja-Brühe-Medium (TSB) auf eine optische Dichte von 0,05 eingestellt. Anschließend wurden unterschiedliche Mengen der mit Ruthenium ausgestatteten Silberpulver aus den erfindungsgemäßen Beispielen 1 und 2 im Bereich von 1 bis 50 mg eingewogen. Die Proben wurden im Schüttelinkubator bei 37°C und 150 U/min inkubiert. Innerhalb von 6 Stunden wurde die optische Dichte bei einer Wellenlänge von 600 nm (OD600) in stündlichen Intervallen bestimmt. Die Hemmung des Bakterienwachstums war durch eine verringerte Zunahme der optischen Dichte im Vergleich zur Kontrollprobe zu erkennen. Als Kontrollprobe diente eine MRSA-Kultur ohne Zusatz einer antimikrobiellen Wirksubstanz. Bei einer vollständigen Hemmung des Bakterienwachstums war keine Zunahme der optischen Dichte zu beobachten. Dabei ergab sich eine minimale Hemmkonzentration für das Produkt aus dem erfindungsgemäßen Beispiel 1 von 0,4 mg/mL, aus dem erfindungsgemäßen Beispiel 2 von 1,6 mg/mL.

## Patentansprüche

1. Ungeträgertes bimetallisches partikelförmiges Material umfassend elementares metallisches Silber und elementares metallisches Ruthenium mit einer durchschnittlichen Teilchengröße (d50) im Bereich von 1 bis 100 µm , bevorzugt 1 bis 20 µm und mit einem Silber: Ruthenium-Gewichtsverhältnis im Bereich von 1 bis 2000 Gewichtsteilen Silber: 1 Gewichtsteil Ruthenium.

2. Ungeträgertes bimetallisches partikelförmiges Material nach Anspruch 1 bestehend aus ≥90 bis 100 Gew.-% mit elementarem Ruthenium ausgestatteten Silberpartikeln und 0 bis ≤10 Gew.-% Silberpartikeln, Rutheniumpartikeln und/oder mit elementarem Silber ausgestatteten Rutheniumpartikeln.

3. Verfahren zur Herstellung des ungeträgerten bimetallischen partikelförmigen Materials nach Anspruch 1 oder 2 mittels Trocknung und einer unter nichtoxidierender Atmosphäre stattfindenden thermolytischen Behandlung einer wässrigen Suspension umfassend Wasser, Silberpartikel und mindestens einen Rutheniumvorläufer in Form einer unter nichtoxidierender Atmosphäre thermisch zu elementarem Ruthenium zersetzbaren Rutheniumverbindung.

4. Verfahren nach Anspruch 3, wobei es sich bei den Silberpartikeln um solche mit einer durchschnittlichen Teilchengröße (d50) im Bereich von 0,5 µm bis 50 µm handelt.

5. Verfahren nach Anspruch 3 oder 4, wobei es sich bei der nichtoxidierenden Atmosphäre um eine reduzierende Atmosphäre handelt und wobei der mindestens eine Rutheniumvorläufer ausgewählt ist aus der Gruppe bestehend aus Rutheniumnitrosylnitrat, Rutheniumoxalat, Rutheniumacetat und Rutheniumnitrosyloxalat.

6. Verfahren nach Anspruch 3 oder 4, wobei es sich bei der nichtoxidierenden Atmosphäre um eine inerte Atmosphäre handelt und wobei der mindestens eine Rutheniumvorläufer ausgewählt ist aus der Gruppe bestehend aus Rutheniumoxalat, Rutheniumacetat und Rutheniumnitrosyloxalat.

7. Verfahren nach einem der Ansprüche 3 bis 6, umfassend die aufeinanderfolgenden Schritte:
(1) Bereitstellen einer wässrigen Suspension umfassend Wasser, Silberpartikel und mindestens einen Rutheniumvorläufer,
(2) Trocknen der in Schritt (1) bereitgestellten wässrigen Suspension, und
(3) thermolytisches Behandeln des nach Beendigung von Schritt (2) erhaltenen getrockneten Materials unter nichtoxidierender Atmosphäre.

8. Verfahren nach einem der Ansprüche 3 bis 6, umfassend die aufeinanderfolgenden Schritte:
(1) Bereitstellen einer wässrigen Suspension umfassend Wasser, Silberpartikel und mindestens einen Rutheniumvorläufer, und
(2+3) Trocknen und thermolytisches Behandeln der in Schritt (1) bereitgestellten wässrigen Suspension unter nichtoxidierender Atmosphäre.

9. Verfahren nach einem der Ansprüche 3 bis 8, wobei das thermolytische Behandeln bei oder oberhalb einer Thermolysetemperatur im Bereich von 150 bis 1000°C erfolgt.

10. Verwendung des ungeträgerten bimetallischen partikelförmigen Materials nach Anspruch 1 oder 2 oder hergestellt nach einem Verfahren nach einem der Ansprüche 3 bis 9 als Additiv zur antimikrobiellen Ausrüstung von Metalloberflächen; Beschichtungsmitteln; Putzen; Formmassen; Kunststoffen in Gestalt von Kunststofffolien, Kunststoffteilen oder Kunststofffasern; Textilien; textilen Anwendungen; Kunstharzprodukten; Ionenaustauscherharzen; Silikonprodukten; Cellulosebasierenden Produkten; Schaumstoffen; und Kosmetika.

11. Verwendung des ungeträgerten bimetallischen partikelförmigen Materials nach Anspruch 1 oder 2 oder hergestellt nach einem Verfahren nach einem der Ansprüche 3 bis 9 als heterogener Katalysator bei der Katalyse der Bildung von Hydroxylradikalen innerhalb von wässrigen, ein Bakterienwachstum erlaubenden Medien.
